(19) Europäisches Patentamt
European Patent Office
Office européen des brevets

(11) Veröffentlichungsnummer: **0 035 263**
**A2**

(12) # EUROPÄISCHE PATENTANMELDUNG

(21) Anmeldenummer: **81101463.8**

(22) Anmeldetag: **28.02.81**

(51) Int. Cl.³: **C 08 G 63/68**, D 06 M 15/52

(30) Priorität: **01.03.80 DE 3007930**

(43) Veröffentlichungstag der Anmeldung: **09.09.81**
**Patentblatt 81/36**

(84) Benannte Vertragsstaaten: **AT BE CH DE FR GB IT LI LU NL SE**

(71) Anmelder: **Henkel Kommanditgesellschaft auf Aktien, -Patentabteilung- Postfach 1100 Henkelstrasse 67, D-4000 Düsseldorf 1 (DE)**

(72) Erfinder: **Ploog, Uwe, Dr., Haydnweg 6, D-5657 Haan (DE)**
Erfinder: **Petzold, Manfred, Am Falder 93, D-4000 Düsseldorf 13 (DE)**
Erfinder: **Wegener, Ingo, Am Falder 20, D-4000 Düsseldorf (DE)**

(54) **Neue Polyesterverbindungen, ein Verfahren zu ihrer Herstellung und ihre Verwendung als Textilweichmacher.**

(57) Die neuen Textilweichmacher sind tertiäre Aminogruppen enthaltende Polyester beziehungsweise deren Salze mit niederen Carbonsäuren, zum Beispiel Essig- oder Glykolsäure, und Mineralsäuren. Ihre Herstellung erfolgt durch Umsetzung einer Dicarbonsäure der Formel:

$$HOOC\text{-}R^3\text{-}COOH$$

$R^3$ = aliphatischer, aromatischer oder alicyclischer, gegebenenfalls substituierter Rest $C_{1-10}$, bevorzugt Alkylen- oder Phenylen, zum Beispiel Adipin- oder Terephthalsäure mit einem alkoxylierten tertiären Amin der Formel:

$$H(O-\underset{R^1}{CH}-CH_2)_m-\underset{R}{N}-(CH_2-\underset{R^2}{CH}-O)_nH$$

R = gesättigter oder ungesättigter, geradkettiger oder verzweigter aliphatischer Rest ($C_{1-20}$, bevorzugt $C_{6-20}$),

$R^1$, $R^2$ = gleich oder verschieden H oder $-CH_3$, bevorzugt $R^1$, $R^2$ = H,

m, n = 1-20 bei 230 - 260°C unter Normaldruck beziehungsweise < 220°C bei 2 mbar Druck, gegebenenfalls in Gegenwart von mit Wasser nicht mischbaren organischen Lösungsmitteln zur azeotropen Destillation des Reaktionswassers, bevorzugt Xylol, und unter Ausschluss von Luftsauerstoff, sowie gegebenenfalls in Gegenwart von geringen Mengen an Antioxydationsmitteln, bevorzugt 0,02-0,2 Gew.-% unterphosphoriger Säure, um hellfarbige Produkte zu erhalten.

EP 0 035 263 A2

P a t e n t a n m e l d u n g
D 6067 EP

"Neue Polyesterverbindungen, ein Verfahren zu ihrer Herstellung und ihre Verwendung als Textilweichmacher"

Durch den Waschvorgang erfolgt bei den meisten Textilien eine gewisse Versprödung oder Verhärtung, wodurch die Trageigenschaften beeinträchtigt werden. Um diesen Nachteil zu beheben, werden während oder meist nach der Wäsche weichmachende Wirkstoffe appliziert, die den Textilien Weichheit und Geschmeidigkeit wiedergeben. Als textilweichmachende Wirkstoffe sind seit langem quartäre Ammoniumverbindungen bekannt, die sich vom Ammoniak oder Imidazolin ableiten und zwei oder drei langkettige, im allgemeinen $C_{16}$-$C_{18}$-Alkylreste aufweisen. Diese Textilweichmacher werden in großem Umfang bei der Textilpflege sowohl von gewerblichen Wäschereien als auch im Haushalt eingesetzt. Der am häufigsten verwendete Textilweichmacher dieser Verbindungsklasse ist Ditalgalkyl- beziehungsweise Distearyl-dimethyl-ammoniumchlorid. Dieser Textilweichmacher besitzt zwar ausgezeichnete weichmachende Eigenschaften sowie Ergiebigkeit, Substantivität und Verwendbarkeit, sowohl während des Wasch- und Spülvorgangs der Wäsche, als auch während des Trocknungsprozesses der Wäsche in einem automatischen Wäschetrockner; der Weichmacher weist jedoch auch Nachteile auf. So vergilbt die Wäsche mitunter bei hohen Trocknungstemperaturen, was bei weißen oder pastellfarbigen Textilien nicht zu akzeptieren ist. Ein anderer Nachteil dieses Weichmachers ist die Tatsache, daß damit behandelte Textilien einen

hydrophoben Charakter bekommen. Insbesondere bei Textilien aus Cellulosefasern, die gerade wegen ihrer hohen Saugfähigkeit in Hygieneartikeln, zum Beispiel Watte, Windeln, Binden, Tampons oder für Frottier- und Trikotwaren, die im Kontakt mit der Haut getragen werden, ist diese wasserabweisende Eigenschaft nicht erwünscht. Häufig läßt sich der Weichmacher bei der Wäsche nicht restlos von Textilien entfernen, so daß es - auch bei richtiger Dosierung - mitunter zu einer Akkumulierung der weichmachenden Wirkstoffe und damit zu einer weiter verringerten Saugwirkung der Textilien kommt.

Es hat nicht an Versuchen gefehlt, diese Nachteile zu beseitigen. So ist es aus der US-PS 3 636 114 bekannt, daß durch die Verwendung von quartären Ammoniumverbindungen mit 2 langkettigen 2-Hydroxyalkylresten die Saugfähigkeit verbessert werden kann. Aus der DE-OS 22 56 234 sind quartäre Ammoniumverbindungen mit 2 langkettigen 2-Hydroxy-3-alkoxypropyl-Gruppen bekannt. Die aus der DE-AS 16 19 043 bekannten Weichmachungsmittel enthalten quartäre Ammoniumverbindungen mit nur einem langen Alkylrest und drei kurzen Alkylresten, wobei die drei kurzen Alkylreste Hydroxyl- und Estergruppen enthalten können. In der niederländischen Patentanmeldung 68/08958 und der US-PS 3 591 405 sind quartäre Ammoniumverbindungen beschrieben, deren hydrophobe Reste Hydroxyalkylgruppen oder über Ethoxygruppen mit dem Stickstoff verknüpfte Alkylgruppen darstellen. Diese Lösungsversuche konnten aber nicht überzeugen, weil entweder die modifizierten quartären Ammoniumverbindungen präparativ schlecht zugänglich waren und daher für eine praktische Anwendung nicht infrage kamen, oder weil die weichmachende Wirkung zu gering war.

/3

Der vorliegenden Erfindung lag daher die Aufgabe zugrunde, neue textilweichmachende Wirkstoffe bereitzustellen, die in einfacher Weise aus gut verfügbaren Rohstoffen erhalten werden können, den damit behandelten Textilien bei guter weichmachender Wirkung die Saugfähigkeit erhalten und sich rückstandslos bei der Wäsche der Textilien entfernen lassen.

Diese Aufgabe wurde erfindungsgemäß gelöst durch tertiäre Aminogruppen enthaltende Polyester und deren Salze mit niederen Carbonsäuren und Mineralsäuren, hergestellt durch Umsetzung einer Dicarbonsäure der Formel I

$$HOOC - R^3 - COOH, \qquad (I)$$

in der $R^3$ einen aliphatischen, aromatischen oder alicyclischen, gegebenenfalls substituierten Rest mit 1 bis 10 Kohlenstoffatomen bedeutet, mit einem alkoxylierten tertiären Amin der Formel II

$$H(O - \underset{R^1}{\underset{|}{CH}} - CH_2)_m - \underset{R}{\underset{|}{N}} - (CH_2 - \underset{R^2}{\underset{|}{CH}} - O)_nH, \qquad (II)$$

in der R einen gesättigten oder ungesättigten geradkettigen oder verzweigten aliphatischen Rest mit 1 bis 20, vorzugsweise 6 bis 20 Kohlenstoffatomen, $R^1$ und $R^2$ Wasserstoff oder den Methylrest bedeuten, wobei $R^1$ und $R^2$ gleich oder verschieden sein können, m und n Zahlen zwischen 1 und 20 sind, mit der Maßgabe, daß die Summe von m + n 2 bis 30 und der Polymerisationsgrad der Polyester 2 bis 50, vorzugsweise 10 bis 20 beträgt.

Die alkoxylierten tertiären Amine der Formel II leiten sich ab von Alkyl- oder Alkenylaminen, wie zum Beispiel Methylamin, Ethylamin, Butylamin, Octylamin, Decylamin,

Dodecylamin, Cetylamin, Eicosylamin, Oleylamin, Linoleylamin, Kokosamin, Talgamin usw.

Besonders geeignete Polyester leiten sich von alkoxylierten Alkylaminen der Formel II ab, die beispielsweise aus Kokosöl oder Talg hergestellt wurden; in diesem Fall bedeutet R in der Formel II einen Rest, der sich von Kokosöl oder Talg ableitet. Die den neuen Polyestern zugrunde liegenden alkoxylierten tertiären Amine können ethoxylierte oder propoxylierte oder gleichzeitig ethoxylierte/propoxylierte Amine sein, wobei aber die ethoxylierten Verbindungen bevorzugt sind.

In den erfindungsgemäßen Polyestern, bei denen von ethoxylierten Aminen ausgegangen wurde, bedeuten $R^1$ und $R^2$ demnach beide Wasserstoff. Der Alkoxylierungsgrad kann in weiten Grenzen schwanken. Je nach dem Alkoxylierungsgrad erhält man mehr oder weniger leicht wasserlösliche Polyester, wobei die hochalkoxylierten leichter wasserlöslich sind als die niedriger alkoxylierten. Eine besonders günstige Eigenschaftskombination hinsichtlich Wasserlöslichkeit der Polyester sowie Weichmachung und Saugfähigkeit der damit behandelten Textilien weisen Polyester auf, deren Alkoxylierungsgrad, das heißt die Summe von m + n in der Formel II zwischen 4 und 25 liegt.

Der Rest $R^3$ stammt aus der Säurekomponente der Polyester. Als Säuren kommen aliphatische, aromatische oder alicyclische, gegebenenfalls substituierte Dicarbonsäuren der Formel I infrage; dies sind beispielsweise Malonsäure, Maleinsäure, Fumarsäure, Bernsteinsäure, Hydroxymalonsäure, Äpfelsäure, Chlorethandicarbonsäure oder auch Oxalsäure. Für die Oxalsäure würde der Rest $R^3$ in Formel I verschwinden. Besonders geeignete aliphatische Dicarbonsäuren sind Säuren mit 6 bis 10 Kohlenstoffatomen, also

/5

Adipinsäure, Pimelinsäure, Korksäure, Azelainsäure und Sebacinsäure. Für diese Säuren ist $R^3$ in Formel I ein Alkylenrest mit 4 bis 8 Kohlenstoffatomen. Als aromatische Dicarbonsäure kommt vor allem die Terephthalsäure infrage; in diesem Fall stellt $R^3$ einen Phenylenrest dar. Statt der freien Säuren kann man mit gleichem Ergebnis auch Derivate dieser Säuren (Anhydride, Halogenide, Dimethylester) in äquimolaren Mengen einsetzen. Im allgemeinen wird man aber die freien Dicarbonsäuren verwenden.

Der Polymerisationsgrad der erfindungsgemäßen Polyester liegt zwischen 2 und 50. Die besten Ergebnisse werden mit Verbindungen erhalten, deren Polymerisationsgrad zwischen etwa 10 und etwa 20 liegt. Der Polymerisationsgrad läßt sich einmal durch das molare Verhältnis zwischen der Säure- und der Diol-Komponente bei der Poly-Kondensationsreaktion zur Herstellung der Polyester und durch die mehr oder weniger vollständig erfolgte Umsetzung der Reaktionspartner steuern; eine Kontrolle hierfür stellt die Säurezahl dar, die für geeignete Polyester mit einem Polymerisationsgrad zwischen 10 und 20 unter etwa 10 liegt. Neutralisiert man die erhaltenen Polyester mit niederen Carbonsäuren, wie zum Beispiel Essigsäure oder Glykolsäure oder mit Mineralsäure, so erhält man die Salze der Polyester, die sich durch besonders gute Wasserlöslichkeit auszeichnen und wie die Polyester verwendet werden können. Ein Verfahren zur Herstellung der neuen Polyester und deren Salze mit niederen Carbonsäuren oder Mineralsäuren ist daher ein weiterer Gegenstand der Erfindung.

Das Verfahren zur Herstellung der erfindungsgemäßen Polyester ist dadurch gekennzeichnet, daß man ein alkoxyliertes tertiäres Amin der Formel II

$$H-(O-\underset{\substack{|\\R^1}}{CH}-CH_2)_m-\underset{\substack{|\\R}}{N}-(CH_2-\underset{\substack{|\\R^2}}{CH}-O)_nH \quad (II)$$

/6

in der m und n die zuvor genannte Bedeutung haben, mit Dicarbonsäuren der Formel I

$$HOOC—R^3—COOH \qquad (I)$$

in der $R^3$ die zuvor genannte Bedeutung hat und insbesondere einen Alkylenrest mit 4 bis 8 Kohlenstoffatomen oder den Phenylenrest darstellt, bei erhöhter Temperatur gegebenenfalls in Gegenwart von mit Wasser nicht mischbaren organischen Lösungsmitteln zur azeotropen Entfernung des Reaktions-Nebenproduktes unter Ausschluß von Luftsauerstoff verestert, bis die Säurezahl des wasser- und lösungsmittelfreien Reaktionsgemisches kleiner als 10 ist. Setzt man zur Veresterung statt der normalerweise verwendeten freien Dicarbonsäuren die oben genannten Säurederivate als Veresterungskomponente ein, sind anstelle von Reaktionswasser teilweise entsprechend andere Reaktionsnebenprodukte zu entfernen. Als Rückstand erhält man die erfindungsgemäßen Polyester, die man gegebenenfalls durch Neutralisation mit niederen Carbonsäuren, wie zum Beispiel Essigsäure oder Glykolsäure oder Mineralsäuren in ihre Salze überführen kann.

Nimmt man die Veresterung bei Normaldruck vor, ist eine Reaktionstemperatur von etwa 230 bis etwa 260 °C eine hinsichtlich der Reaktionsgeschwindigkeit und der möglichst geringen thermischen Belastung der Reaktionspartner günstige Temperatur. Man kann die Reaktion aber ebensogut unter vermindertem Druck durchführen, beispielsweise bei einem Druck von 2 mbar oder weniger. In diesem Fall beträgt die Reaktionstemperatur höchstens 220 °C. Auf jeden Fall ist ein Ausschluß von Luftsauerstoff erforderlich. Hierzu evakuiert man zweckmäßigerweise vor der Umsetzung den Reaktionsbehälter mehrmals und entspannt dann mit Inertgas, wobei man dem Reaktionsgemisch vor-

/7

zugsweise unterphosphorige Säure als Antioxidationsmittel zusetzt. Ein Zusatz von 0,02 bis 0,2 Gewichtsprozent, bezogen auf das gesamte Gewicht des Reaktionsansatzes ist dabei ausreichend, um hellfarbige Produkte zu erhalten.

Bei der Poly-Kondensation anfallendes Reaktionsnebenprodukt im allgemeinen Wasser, kann dabei direkt aus dem Reaktionsgemisch abdestilliert werden. Eine andere Möglichkeit zur Wasserabtrennung besteht in der azeotropen Destillation mit einem mit Wasser nicht mischbaren organischen Lösungsmittel, beispielsweise Xylol. Ein Zusatz von maximal 5 Gewichtsprozent Xylol, bezogen auf das Reaktionsgemisch hat sich dabei besonders bewährt. Man verfolgt den Verlauf der Kondensationsreaktion über die Menge des gebildeten Wassers. Gegen Ende der Reaktion nimmt man Proben des Reaktionsgemisches und bestimmt die Säurezahl als genaues Maß für den Umsatz der Säure-Komponente. Sobald die Säurezahl den Wert 10 unterschritten hat, kann die Umsetzung beendet werden. Die so erhaltenen Reaktionsprodukte werden gegebenenfalls mit stöchiometrischen Mengen niederer Carbonsäuren oder Mineralsäuren neutralisiert; sie weisen einen Polymerisationsgrad zwischen 2 und 50 auf, wenn man pro Mol Di-polyalkoxyalkylamin der Formel II 0,8 bis 1,1 Mol Dicarbonsäure der Formel I eingesetzt hat. Im allgemeinen liegt der Polymerisationsgrad der so hergestellten Polyester zwischen 10 und 20.

Die nach dem erfindungsgemäßen Verfahren hergestellten Verbindungen lassen sich als Textilweichmacher zur Anwendung während des Waschens in Flotten, die Waschmittel auf Aniontensid- und/oder Niotensid-Basis enthalten, oder im Spülbad oder im Wäschetrockner einsetzen. In Salz-Form sind sie etwa gleich wirksam wie in Form der tertiären Amine. Sie verleihen den damit behandelten Textilien einen angenehmen weichen Griff ohne Beeinträchtigung der Saugfähigkeit der Textilien. Die neuen Verbindungen sind

/8

Flüssigkeiten; sie lösen sich ohne Gelbbildung klar in Wasser, wobei die Wasserlöslichkeit der Salze gegenüber der der tertiären Amine noch besser ist. Bei der Wäsche werden die Verbindungen restlos entfernt, so daß eine Akkumulierung nicht erfolgt. Die neuen Verbindungen lassen sich gegebenenfalls auch zusammen mit herkömmlichen Textilweichmachern auf Basis quartärer Ammoniumverbindungen zu klaren wäßrigen Lösungen konfektionieren.

Sie lassen sich weiterhin gegebenenfalls mit Antimikrobika, optischen Aufhellern, nichtionischen und kationischen Tensiden und anderen üblichen Bestandteilen von Avivagemitteln und Waschmitteln problemlos vermischen. Die Verwendung der neuen Verbindungen als Textilweichmacher in insbesondere flüssigen Waschmitteln und Wäschenachbehandlungsmitteln ist demnach ein weiterer Gegenstand der Erfindung. Die Mittel enthalten dabei 0,5 bis 80 Gewichtsprozent der Verbindungen der Formel I und wenigstens ein Verdünnungsmittel sowie gegebenenfalls sonstige übliche Zusatzstoffe für Waschmittel und Wäschenachbehandlungsmittel.

Die Verwendung der erfindungsgemäßen textilweichmachenden Mittel in Wäschereien und Haushaltungen zur Nachbehandlung von gewaschener Wäsche kann auf verschiedene Weise erfolgen, je nach der Wahl des Trocknungsverfahrens. Wird in einem Wäschetrockner getrocknet, so kann man die Wäsche im Wäschetrockner mit den erfindungsgemäßen Polyestern behandeln. Gegenwärtig wird jedoch die Wäsche zum größten Teil hängend getrocknet; es überwiegt daher die Anwendung des Weichmachungsmittels während des Waschvorgangs in der Waschflotte oder im letzten Spülbad des Waschprozesses bei der Hand- und insbesondere bei der Maschinenwäsche. Dabei werden solche Mengen des erfindungsgemäßen Mittels in der Spülflotte aufgelöst,

/9

daß die Konzentration des Polyesters 0,05 bis 1,1 g/l, vorzugsweise 0,1 bis 1,0 g/l beträgt.

Als Verdünnungsmittel für flüssige Textilbehandlungsmittel kommen Wasser und/oder wasserlösliche organische Lösungsmittel infrage. Brauchbare wasserlösliche organische Lösungsmittel sind die niederen Alkohole mit 1 bis 5 Kohlenstoffatomen, wie zum Beispiel Methanol, Ethanol, Propanol, Isopropylalkohol, n-Butanol, Isobutanol, Amylalkohol, ferner die niederen Ketone Aceton und Methylethylketon sowie Ethylenglykol, Propylenglykol, Diethylenglykol und deren Mono- oder Dietherderivate mit insbesondere Methyl- und Ethylresten.

Als sonstige übliche Bestandteile von Textilbehandlungsmitteln gelten beispielsweise Dispergatoren, optische Aufheller, antimikrobielle Wirkstoffe, saure Zusatzstoffe, Lösungsvermittler, Farb- und Duftstoffe.

Die erfindungsgemäßen Polyester können auch zusammen mit bekannten Textilweichmachern vom Typ der quartären Ammoniumverbindungen, wie zum Beispiel Ditalgalkyldimethylammoniumchlorid, oder mit bekannten Textilweichmachern mit Amidstruktur vom Typ der Fettsäurekondensationsprodukte mit Hydroxyalkylpolyaminen, beispielsweise dem Kondensationsprodukt aus 1 Mol Talg und 1 Mol 2-Hydroxyethylethylendiamin, kombiniert werden. Auch der Zusatz von bekannten, für die Konfektionierung in Textilbehandlungsmitteln geeigneten antimikrobiellen Wirkstoffe vom Typ der antimikrobiell wirksamen quartären Ammoniumverbindungen, wie zum Beispiel Benzyldodecyldimethylammoniumchlorid, sowie von antimikrobiellen Nitroalkoholen beziehungsweise von Phenolderivaten beziehungsweise Carbamaten usw. ist möglich.

/10

Die Zusammensetzung praktisch besonders interessanter flüssiger Wäschenachbehandlungsmittel, in denen die neuen Wirkstoffe verwendbar sind, liegt im allgemeinen Bereich der folgenden Rezeptur:

| | |
|---|---|
| 2,0 - 30,0, | vorzugsweise 5,0 - 25,0 Gewichtsprozent erfindungsgemäße Polyester, |
| 0,2 - 6,0, | vorzugsweise 0,5 - 3,0 Gewichtsprozent Dispergatoren, |
| 0,0 - 30,0, | vorzugsweise 1,0 - 15,0 Gewichtsprozent wasserlösliche organische Lösungsmittel, |
| 0,0 - 10,0, | vorzugsweise 0,3 - 7,5 Gewichtsprozent sonstige übliche Bestandteile von Wäschenachbehandlungsmitteln, |
| Rest | Wasser. |

Als sonstige übliche Bestandteile von Wäschenachbehandlungsmitteln kann wenigstens eine der folgenden Komponenten in den angegebenen, auf das gesamte Mittel bezogenen Mengen vorhanden sein:

| | | |
|---|---|---|
| 0,2 | - 5,0 | Gewichtsprozent anderer, von den erfindungsgemäßen Polyestern verschiedener Textilweichmacher, |
| 0,2 | - 3,0 | Gewichtsprozent antimikrobielle Wirkstoffe, |
| 0,2 | - 6,0 | Gewichtsprozent saurer Zusatzstoff, |
| 0,01 | - 0,5 | Gewichtsprozent Baumwollaufheller, |
| 0,01 | - 0,5 | Gewichtsprozent Polyamidaufheller, |
| 0,01 | - 0,5 | Gewichtsprozent Duftstoff, |
| 0,00001 | - 0,05 | Gewichtsprozent Farbstoff. |

Die Verwendung derartig zusammengesetzter Mittel ist auch im Wäschetrockner möglich, indem die Mittel entweder im Wäschetrockner auf die feuchte Wäsche aufgesprüht werden

oder in die Innenwand der Trocknertrommel vor der Beschickung mit der Wäsche mit dem Mittel besprüht wird, oder indem man zu der Wäsche im Tumbler saugfähige Substrate, die mit dem Mittel imprägniert sind, hinzugibt und diese den Trocknungsvorgang mitmachen läßt, wodurch der Wirkstoff auf die Wäschestücke übertragen wird.

Im folgenden werden die in den Textilbehandlungsmitteln neben den erfindungsgemäßen Polyestern noch enthaltenen Bestandteile, nach Substanzklassen geordnet, näher beschrieben.

Als Dispergatoren, wie sie in flüssigen oder pulverförmigen Textilbehandlungsmitteln enthalten sein können, eignen sich insbesondere die nichtionischen Tenside ("Nonionics"). Derartige Nonionics enthalten im Molekül wenigstens einen hydrophoben Rest und wenigstens eine nichtionische wasserlöslichmachende Gruppe. Von besonderem praktischen Interesse sind die durch Anlagerung von Ethylenoxid und/oder Propylenoxid an Fettalkohole oder Alkylphenole erhältlichen Produkte. Unter sauren Zusatzstoffen werden anorganische oder organische Säuren mit 2 bis 8 Kohlenstoffatomen verstanden. Glykolsäure und Citronensäure sind wegen ihrer leichten Zugänglichkeit und Ungiftigkeit bevorzugte Säuren.

Unter antimikrobiellen Wirkstoffen werden hier bakterizid oder bakteriostatisch beziehungsweise fungizid oder fungistatisch wirkende Verbindungen verstanden. Diese Wirkstoffe sollen entweder als solche oder in Form ihrer Salze wasserlöslich sein. Beispiele für antimikrobielle Verbindungen sind quartäre Ammoniumverbindungen.

/12

Weitere brauchbare antimikrobielle Wirkstoffe sind die sowohl durch Brom als auch durch die Nitrogruppe substituierten niederen Alkohole beziehungsweise Diole mit 3 bis 5 Kohlenstoffatomen, wie zum Beispiel die Verbindungen 2-Brom-2-nitropropan-1,3-diol, 1-Brom-1-nitro-3,3,3-trichlor-2-propanol, 2-Brom-2-nitro-butanol.

Als antimikrobielle Wirkstoffe eignen sich auch phenolische Verbindungen vom Typ der halogenierten Phenole mit 1 bis 5 Halogensubstituenten.

Unter antimikrobiellen Wirkstoffen im weiteren Sinne werden auch Zusätze, wie zum Beispiel Formaldehyd, Sorbinsäure, Natriumflourid verstanden, die zur Konservierung der Präparate dienen.

Die erfindungsgemäßen Polyester eignen sich auch zur Konfektionierung von schüttfähigen Textilnachbehandlungsmitteln in Pulverform. Als Verdünnungsmittel für derartige pulverförmige Mittel eignen sich beispielsweise Harnstoff, Acetamid, Natriumsulfat, feinteilige Kieselsäure, Diatomeenerde usw. und gegebenenfalls vorhandene andere übliche Bestandteile, sofern diese in fester Form vorliegen. Neben ihrer Eignung als textilweichmachender Wirkstoff in pulverförmigen und insbesondere flüssigen Wäschenachbehandlungsmitteln lassen sich die neuen Polyester auch in pulverförmige und insbesondere flüssige Waschmittel für Textilien einarbeiten. Besonders vorteilhaft ist hierbei die gute Verträglichkeit der neuen Polyester, nicht nur mit nichtionischen und kationischen, sondern auch mit anionischen Tensiden. Die Verwendung der erfindungsgemäßen Polyester in für die gleichzeitige Wäsche und Pflege von Textilien geeigneten pulverförmigen und insbesondere flüssigen Waschmitteln mit einem Gehalt an den erfindungsgemäßen Polyestern ist daher ein weiterer Gegenstand der Erfindung.

/13

Diese Waschmittel enthalten:

| | |
|---|---|
| 5 - 50 | Gewichtsprozent einer Tensid-Komponente, |
| 0,5 - 20 | Gewichtsprozent erfindungsgemäße Polyester, |
| 30 - 94,5 | Gewichtsprozent übliche Bestandteile von pulverförmigen und insbesondere flüssigen Waschmitteln. |

Die Tensid-Komponente besteht aus wenigstens einem Tensid aus der Gruppe der anionischen, zwitterionischen oder nichtionischen Tenside.

Technisch besonders interessante anionische Tenside sind Sulfonate und Sulfate. Zu den Sulfonaten gehören beispielsweise die Alkylarylsulfonate, insbesondere die Alkylbenzolsulfonate, Alkansulfonate und die Dialkalisalze von $\alpha$-Sulfofettsäuren und deren Estern. Als Tenside vom Sulfattyp sind Fettalkoholsulfate zu nennen, insbesondere solche aus Kokosfettalkoholen, Talgfettalkoholen oder aus Oleylalkohol hergestellte. Unter zwitterionischen Tensiden werden solche Verbindungen verstanden, die im Molekül sowohl saure als auch basische hydrophile Gruppen enthalten. Besonders geeignete zwitterionische Tenside sind beispielsweise die Carboxy-, Sulfat- und Sulfonatbetaine.

Zu den nichtionischen Tensiden gehören im wesentlichen die bereits zuvor als Dispergatoren beschriebenen Anlagerungsprodukte von Ethylenoxid und/oder Propylenoxid an Fettalkohole oder Alkylphenole. Weiterhin zählen zu den geeigneten Nonionics wasserlösliche Anlagerungsprodukte von Ethylenoxid an wasserunlösliche Polypropylenglykole.

0035263
HENKEL KGaA



Zu den sonstigen üblichen Waschmittelbestandteilen gehören zum Beispiel neutral bis alkalisch reagierende Gerüstsubstanzen, Komplexbildner, Schaumstabilisatoren, Schauminhibitoren, Schmutzträger, Enzyme usw.

Flüssige Waschmittel enthalten darüber hinaus noch Lösungsmittel für die übrigen Waschmittelbestandteile. Als Lösungsmittel für die erfindungsgemäßen Waschmittel wird vorzugsweise Wasser verwendet. Es können aber auch organische Lösungsmittel in Mengen bis zu 20, vorzugsweise bis zu 16 Gewichtsprozent des gesamten Flüssigwaschmittels mit verwendet werden. Derartige zusätzliche Lösungsmittel sind entweder niedere Alkanole oder niedere Diole oder Polyole wie beispielsweise Ethanol, Isopropylalkohol, Ethylenglykol, Propylenglykol oder Glycerin. Gegebenenfalls können auch Polyole mit Etherverbindungen wie Methyl-, Ethyl-, Butyl- oder Diethylenglykol beziehungsweise deren Acetate (beispielsweise Produkte vom Typ der "Cellosolve" der Union Carbide Corp.) eingesetzt werden.

Zur Verbesserung der Löslichkeit der Tenside ist es häufig zweckmäßig, zusätzlich oder anstelle der zuvor genannten organischen Lösungsmittel Lösungsvermittler, sogenannte Hydrotrope, zu verwenden.

Die erfindungsgemäßen Polyester finden insbesondere Verwendung in flüssigen Waschmitteln der Zusammensetzung:

/15

5 - 35 Gewichtsprozent einer Tensid-Komponente,
0,5 - 10 Gewichtsprozent erfindungsgemäßer Polyester,
Rest Lösungsmittel und übliche Bestandteile von flüssigen Waschmitteln.

Nicht nur flüssige Waschmittel mit einem Gehalt an erfindungsgemäßen Polyestern, sondern auch pulverförmige Produkte lassen sich konfektionieren, wenn man die flüssigen Polyester durch Vermischen mit pulverförmigen anderen Waschmittel-Bestandteilen in Pulverform überführt. Hierzu eignen sich die bereits bei den pulverförmigen Nachbehandlungsmitteln beschriebenen Verdünnungsmittel; darüber hinaus sind aber auch die übrigen pulverförmigen üblichen Waschmittel-Bestandteile als Verdünnungsmittel für die flüssigen Polyester oder deren Salze geeignet. Pulverförmige Produkte lassen sich nach allen in der Technik bekannten Verfahren herstellen. So kann man zum Beispiel die pulverförmigen Bestandteile miteinander vermischen und ölige oder pastenförmige Bestandteile, wie zum Beispiel die Polyester oder nichtionische Tenside auf das Produkt aufsprühen. Eine andere Herstellungsmöglichkeit besteht darin, daß man die Bestandteile der Mittel mit Wasser zu einem Brei anteigt, den man durch Verdampfen des Wassers, zum Beispiel auf Walzen oder in Zerstäubungstürmen in ein Pulver überführt. Nach dem Heißtrocknen lassen sich dann noch wärmeempfindliche oder flüchtige Substanzen, wie beispielsweise Duftstoffe einarbeiten.

Übliche Waschmittelbestandteile für pulverförmige Waschmittel sind beispielsweise Gerüststoffe, Duftstoffe, Farbstoffe, Schmutzträger, Enzyme, optische Aufheller oder geringe Mengen Wasser. Zu den Gerüststoffen zählen Calcium fällende oder komplexierende anorganische oder organische Verbindungen, beispielsweise Phosphate oder die kationischen Alkalialumosilikate, wie sie beispielsweise in der DE-AS 24 12 837 beschrieben sind. Ferner gehören dazu sauer, neutral oder alkalisch reagierende anorganische Salze.

Zu den Schmutzträgern sind wasserlösliche Kolloide, meist organischer Natur, zu zählen, beispielsweise die wasserlöslichen Salze polymerer Carbonsäuren, Leim, Ethersulfonsäuren der Stärke oder der Cellulose oder auch Polyvinylpyrrolidon.

Die erfindungsgemäßen Waschmittel können zum Waschen und gleichzeitigen Weichmachen von Feinwaschartikeln aus Wolle, synthetischen Fasern, wie Polyester, Polyacrylnitril, Polyamid und Mischungen aus Wolle und synthetischen Fasern benutzt werden. Der Wasch- und Weichmachungsvorgang kann entweder in der Waschmaschine oder auch von Hand bei Waschtemperaturen bis zu etwa 60 °C, vorzugsweise bis etwa 30 °C erfolgen. Die Anwendungskonzentration der Mittel liegt im allgemeinen bei 1 bis 10 g/l Waschlauge, vorzugsweise bei 2 bis 5 g/l. Die Waschmittel zeichnen sich dadurch aus, daß sie die Textilien einwandfrei reinigen und ihnen gleichzeitig einen angenehmen Griff und antielektrostatische Eigenschaften verleihen. Bei der Wäsche von Hand im Waschbecken bilden sie einen dichten angenehmen Schaum aus, beim Waschen in der Waschmaschine wird kein Überschäumen beobachtet. Außerdem läßt sich der Schaum problemlos ausspülen.

0035263
HENKEL KGaA



Beispiele

In den folgenden Beispielen 1 bis 8 wird die Herstellung der erfindungsgemäßen Polyester aus Dicarbonsäuren und Di-(polyalkoxy)-alkylamin beschrieben.

Beispiel 1

In einem heiz- und kühlbaren, mehrfach tubulierten Rührgefäß mit Thermometer, Aufsatz zur Wasserabscheidung durch azeotrope Destillation und Stickstoffeinleitungsrohr wurden 1 Mol Talgalkylamin + 10 Mol Ethylenoxid (695 g) und 0,833 Mol Adipinsäure (122 g) unter Zusatz von 1 g unterphosphoriger Säure (50 %ig) unter Rühren vermischt, zur Entfernung von Luftsauerstoff mehrmals evakuiert und mit Stickstoff entspannt und anschließend mit 45 g Xylol versetzt. Unter Rühren wurde das Reaktionsgemisch auf 240 bis 245 °C solange erhitzt bis das Wasser (ca. 2 Mol) abgeschieden war und die Säurezahl einer Probe 8,6 betrug. Man ließ dann auf 200 °C abkühlen, stellte einen Druck von ca. 25 mbar ein und destillierte das restliche Xylol ab. Der Kolbenrückstand war eine bräunlich-gelbe Flüssigkeit, die bei 25 °C eine Viskosität von 1560 mPa s aufwies. Sie wurde mit 1 Mol Essigsäure neutralisiert und war dann wasserlöslich.

Beispiel 2

In einem beheizbaren Rührgefäß mit Thermometer, Siedekapillare, Stickstoffeinleitungsrohr und absteigendem Kühler mit Vakuumvorlage wurden 1 Mol Kokosalkylamin + 15 Mol Ethylenoxid (850 g) und 1 Mol Sebacinsäure (202 g) unter Zusatz von 1 g unterphosphoriger Säure (50 %ig) unter Rühren vermischt, mehrmals unter Entspannung mit Stickstoff evakuiert und bei ca. 210 °C bei einem Druck von max. 2 mbar solange unter Wasserabscheidung umgesetzt, bis eine Probe des Reaktionsproduktes eine Säurezahl von 4,8 aufwies. Man erhielt eine bräunlich/gelbe Flüssigkeit mit einer Viskosität bei 25 °C von ca. 2000 mPa s. Dieses Produkt war in dieser Form und nach Neutralisation mit 1 Säureäquivalent Schwefelsäure ein mit Wasser in jedem Verhältnis verdünnbarer textilweichmachender Wirkstoff.

<u>Beispiele 3 - 8</u>

Setzt man die in der folgenden Tabelle angegebenen Fettamin-Alkoxylate mit den angegebenen Säuren in dem jeweils aufgeführten molaren Verhältnis um, wie es in Beispiel 1 oder 2 beschrieben ist, erhält man ebenfalls ausgezeichnete textilweichmachende Polyester, die die Saugfähigkeit der damit behandelten Textilien erhalten.

Tabelle I

| Beispiel Nr. | Fettaminalkoxylat Mol | Dicarbonsäure Mol | Säurezahl mg KOH/g | Viskosität 25 mPa s |
|---|---|---|---|---|
| 3 | Talgalkylamin + 10 EO<br>1 | Adipinsäure<br>0,923 | 6,1 | 1765 |
| 4 | Talgalkylamin + 10 EO<br>1 | Adipinsäure<br>0,950 | 5,0 | 2100 |
| 5 | Talgalkylamin + 10 EO<br>1 | Adipinsäure<br>1 | 6,2 | 3750 |
| 6 | Talgalkylamin + 5 EO<br>1 | Adipinsäure<br>0,833 | 6,5 | 1290 |
| 7 | Talgalkylamin + 5 EO<br>+ 5 PO<br>1 | Sebacinsäure<br>0,833 | 6,1 | 1800 |
| 8 | Kokosalkylamin + 10 EO<br>1 | Terephthalsäure<br>1 | 2,1 | 3200 |

Beispiel 9

Dieses Beispiel zeigt die weichmachende Wirkung und die Erhaltung der Saugfähigkeit bei den mit den erfindungsgemäßen Wirkstoffen behandelten Geweben. Zur Prüfung wurde Baumwoll-Frottiergewebe durch mehrfaches Waschen in einem Vollwaschmittel hart gemacht. Proben dieses Materials wurden dann mit einer wäßrigen Flotte (16 °d), die 0,2 Gewichtsprozent des Wirkstoffs aus Beispiel 1, bezogen auf das Baumwoll-Frottiergewebe, enthielt, 3 Minuten lang bei Raumtemperatur behandelt, in einer Wäscheschleuder auf ca. 100 Gewichtsprozent Restfeuchte entwässert und an der Luft bei Raumtemperatur hängend getrocknet. In gleicher Weise wurden Proben mit einer Flotte behandelt, die in gleicher Konzentration einen handelsüblichen Textilweichmacher (Distearyldimethylammoniumchlorid) enthielt. Diese so hergestellten Proben wurden auf ihre Weichheit und Saugfähigkeit geprüft und dabei verglichen mit Proben, die analog hergestellt waren, aber nur mit Wasser behandelt wurden. Die Prüfungen wurden wie folgt durchgeführt:

Weichheit

Die Prüfung auf Weichheit erfolgte haptisch. Sie wurde von mehreren Personen, die in der Durchführung der Prüfung geschult und erfahren sind, vorgenommen. Die Weichheit des Griffs wurde mit Noten von 1 (= hart) bis 5 (= sehr weich) angegeben, wobei die Note 1 dem Ergebnis der Behandlung ohne Wirkstoff und die Note 5 dem Ergebnis der Behandlung mit Distearyldimethylammoniumchlorid entsprach.

Saugfähigkeit

2 x 2 cm große Probenstücke wurden auf die Oberfläche von Leitungswasser (16 °d) bei Raumtemperatur gelegt und die Zeit gemessen, die bis zum Untersinken der Proben vergeht.

/21

0035263
HENKEL KGaA


Die Ergebnisse der Weichheits- und Saugfähigkeitsprüfung sind in der folgenden Tabelle II enthalten:

Tabelle II

| Behandlung mit | Weichheit (Note) | Saugfähigkeit (sec.) |
|---|---|---|
| Erfindungsgemäßer Wirkstoff aus Beispiel 1 | 4 | 1 |
| Distearyldimethylammoniumchlorid | 5 | > 300 |
| Wasser ohne Zusatz | 1 | 1 |

Darüber hinaus weisen Gewebe, die mit den erfindungsgemäßen Polyestern behandelt wurden, ausgezeichnete antielektrostatische Eigenschaften auf.

Beispiele 10 und 11

Mit den Polyestern aus Beispiel 2 und Beispiel 6 wurden folgende fertig konfektionierte Textilweichmachungsmittel konfektioniert:

Rezeptur 10

| | |
|---|---|
| 6,0 | Gewichtsprozent Polyester aus Beispiel 2 |
| 2,0 | Gewichtsprozent Polyglykol mit Molekulargewicht 200 |
| 0,1 | Gewichtsprozent Duftstoff |
| 0,006 | Gewichtsprozent Farbstoff |
| Rest | Wasser |

Rezeptur 11

12,0 Gewichtsprozent Polyester aus Beispiel 6
2,0 Gewichtsprozent Polyglykol mit Molekulargewicht 200
1,0 Gewichtsprozent Isopropylalkohol
0,2 Gewichtsprozent Duftstoff
0,01 Gewichtsprozent Farbstoff
Rest Wasser

Diese gebrauchsfertigen Mittel lassen sich leicht mit Wasser auf eine übliche Gebrauchskonzentration von ca. 2 bis ca. 10 g pro Liter verdünnen. Sie sind auch bei niedrigen Temperaturen ausgezeichnet lagerstabil. Bei ihrer Anwendung als Wäschenachbehandlungsmittel erhält man ähnliche Ergebnisse wie in Beispiel 9 beschrieben.

Beispiel 12 und 13

Außer in Wäschenachbehandlungsmitteln sind die erfindungsgemäßen Polyester auch als textilweichmachender Wirkstoff in Waschmitteln auf Basis von nichtionischen und/oder anionischen Tensiden geeignet. Daher wurden folgende Waschmittel mit dem Polyester aus Beispiel 1 hergestellt:

Rezeptur 12

10,0 Gewichtsprozent Oleyl-/Cetylalkohol + 5 EO
12,0 Gewichtsprozent $C_{12}$-$C_{18}$-Fettalkohol + 10 EO
1,0 Gewichtsprozent Seife (Na-Talgfettsäure)
1,0 Gewichtsprozent Polyester aus Beispiel 1
5,0 Gewichtsprozent Isopropylalkohol
Rest Wasser

Rezeptur 13

19,0 Gewichtsprozent Alkylbenzolsulfonat, Na-Salz
4,0 Gewichtsprozent Laurylethersulfat, Na-Salz
5,0 Gewichtsprozent $C_{12}$-$C_{18}$-Fettalkohol + 10 EO

/23

1,5 Gewichtsprozent Polyester aus Beispiel 1
5,0 Gewichtsprozent Kaliumtripolyphosphat
4,0 Gewichtsprozent Kaliumcumolsulfonat
Rest Wasser

Mit diesen Waschmitteln wurde künstlich angeschmutztes Baumwollgewebe bei 45 °C 15 Minuten lang gewaschen, wobei die Waschmittel-Konzentration in der Waschflotte so gewählt wurde, daß die Polyesterkonzentration einmal 0,25 und zum anderen 1,0 g pro Liter Waschflotte betrug. Anschließend wurde je 2 Minuten lang 1 x warm und 2 x kalt gespült und die Waschwirkung durch Messung der Remission mit einem Elrepho-Weißgradmesser und die Weichheit geprüft und mit Ergebnissen verglichen, die erhalten wurden, wenn man die gleichen Waschmittel in gleicher Konzentration ohne Polyester-Zusatz verwendete. Die Ergebnisse sind in Tabelle III enthalten.

Tabelle III

| Waschmittel | % Remission<br>Polyester-Konzentration<br>0,25 g/l | <br><br>1,0 g/l | Weichheit |
|---|---|---|---|
| Rezeptur 12 | | | |
| mit Polyester | 49,1 | 57,6 | 3 - 4 |
| ohne Polyester | 49,6 | 58,5 | 1 |
| Rezeptur 13 | | | |
| mit Polyester | 38,3 | 42,7 | 3 - 4 |
| ohne Polyester | 38,2 | 43,9 | 1 |

Diese Ergebnisse zeigen, daß durch die Anwesenheit der erfindungsgemäßen Polyester die Waschleistung praktisch nicht beeinflußt wird, während die weichmachende Wirkung deutlich ist.

Vergleichbare Resultate erhält man auch, wenn man die Nonionics der Rezeptur 12 durch andere Nonionics, beispielsweise durch die Anlagerungsprodukte von Ethylenoxid und/oder Propylenoxid an Fettsäuren, Fettamine, Fettsäure- oder Sulfonsäureamide ersetzt, wobei diese Nonionics 4 bis 100, vorzugsweise 6 bis 40 und insbesondere 8 bis 20 Etherreste pro Molekül enthalten können. Ebenso erhält man ähnliche Ergebnisse, wenn man die Anlagerungsprodukte von Ethylenoxid an Alkylphenole oder Oxoalkohole einsetzt. Ebenso erhält man vergleichbare Resultate, wenn man die in der Rezeptur 13 eingesetzten anionischen Tenside durch $C_8$-$C_{18}$-Alkansulfonate, vorzugsweise durch $C_{12}$-$C_{18}$-Alkansulfonate ersetzt. Ähnliche Ergebnisse erhält man auch, wenn man die Lösungsmittel der Rezepturen 12 und 13 durch entsprechende pulverförmige Träger und Gerüststoffe ersetzt.

/25

## Patentansprüche

1. Tertiäre Aminogruppen enthaltende Polyester und deren Salze mit niederen Carbonsäuren und Mineralsäuren, hergestellt durch Umsetzung einer Dicarbonsäure der Formel I

$$HOOC - R^3 - COOH, \qquad (I)$$

in der $R^3$ einen aliphatischen, aromatischen oder alicyclischen, gegebenenfalls substituierten Rest mit 1 bis 10 Kohlenstoffatomen bedeutet, mit einem alkoxylierten tertiären Amin der Formel II

$$H(O - \underset{\displaystyle R^1}{\underset{|}{CH}} - CH_2)_m - \underset{\displaystyle R}{\underset{|}{N}} - (CH_2 - \underset{\displaystyle R^2}{\underset{|}{CH}} - O)_n H, \qquad (II)$$

in der R einen gesättigten oder ungesättigten geradkettigen oder verzweigten aliphatischen Rest mit 1 bis 20, vorzugsweise 6 bis 20 Kohlenstoffatomen, $R^1$ und $R^2$ Wasserstoff oder den Methylrest bedeuten, wobei $R^1$ und $R^2$ gleich oder verschieden sein können, m und n Zahlen zwischen 1 und 20 sind, mit der Maßgabe, daß die Summe von m und n 2 bis 30 und der Polymerisationsgrad der Polyester 2 bis 50, vorzugsweise 10 bis 20 beträgt.

2. Verbindungen nach Anspruch 1, dadurch gekennzeichnet, daß R einen Rest darstellt, der sich von Kokosöl oder Talgfett ableitet.

3. Verbindungen nach den Ansprüchen 1 bis 2, dadurch gekennzeichnet, daß $R^1$ und $R^2$ Wasserstoff bedeuten.

4. Verbindungen nach den Ansprüchen 1 bis 3, dadurch gekennzeichnet, daß die Summe von m und n 4 bis 25 beträgt.

5. Verbindungen nach den Ansprüchen 1 bis 4, dadurch gekennzeichnet, daß $R^3$ einen Alkylenrest mit 4 bis 8 Kohlenstoffatomen oder einen Phenylenrest bedeutet.

6. Verbindungen nach den Ansprüchen 1 bis 5, dadurch gekennzeichnet, daß sie in Form ihrer Salze mit niederen Carbonsäuren, wie zum Beispiel Essigsäure oder Glykolsäure oder Mineralsäuren vorliegen.

7. Verfahren zur Herstellung von Verbindungen der Ansprüche 1 bis 6, dadurch gekennzeichnet, daß man ein alkoxyliertes tertiäres Amin der Formel II

$$H(O-\underset{\displaystyle R^1}{\underset{|}{CH}}-CH_2)_m-\underset{\displaystyle R}{\underset{|}{N}}-(CH_2-\underset{\displaystyle R^2}{\underset{|}{CH}}-O)_nH \qquad (II)$$

in der m und n die zuvor genannte Bedeutung haben, mit Dicarbonsäuren der Formel I

$$HOOC-R^3-COOH \qquad (I)$$

oder deren Anhydride, Halogenide oder Niedrigalkylester, in der $R^3$ die zuvor genannte Bedeutung hat, bei erhöhter Temperatur gegebenenfalls in Gegenwart von mit Wasser nicht mischbaren organischen Lösungsmitteln unter Ausschluß von Luftsauerstoff sowie gegebenenfalls in Gegenwart von geringen Mengen von Antioxidationsmitteln unter Abtrennung der Reaktionsnebenprodukte, gegebenenfalls gemeinsam mit den organischen Lösungsmitteln verestert, bis die Säurezahl des wasser- und lösungsmittel-freien Reaktionsgemisches kleiner als 10 ist, wobei man als Rückstand Verbindungen nach den Ansprüchen 1 bis 5 erhält, die man gegebenenfalls durch Neutralisation mit niederen Carbonsäuren oder Mineralsäuren in ihre Salze überführt.

8. Verfahren nach Anspruch 7, dadurch gekennzeichnet, daß man die Veresterung bei Normaldruck und einer Reaktionstemperatur von ca. 230 bis ca. 260 °C vornimmt.

9. Verfahren nach Anspruch 7, dadurch gekennzeichnet, daß man die Veresterung unter vermindertem Druck bei einer Reaktionstemperatur von höchstens 220 °C vornimmt.

10. Verfahren nach den Ansprüchen 7 bis 9, dadurch gekennzeichnet, daß man die Veresterung unter Inertgasatmosphäre und mit einem Zusatz von 0,02 bis 0,2 Gewichtsprozent, bezogen auf das Reaktionsgemisch, unterphosphoriger Säure als Antioxidationsmittel vornimmt.

11. Verfahren nach den Ansprüchen 7 bis 10, dadurch gekennzeichnet, daß man zur Abtrennung des Reaktionswassers dem Reaktionsgemisch bis zu 5 Gewichtsprozent, bezogen auf das Reaktionsgemisch, Xylol zusetzt, mit dem man das Wasser abdestilliert.

12. Verfahren nach den Ansprüchen 7 bis 11, dadurch gekennzeichnet, daß man pro Mol alkoxyliertes tertiäres Amin der Formel II 0,8 bis 1,1 Mol Dicarbonsäure der Formel I oder deren Anhydrid, Halogenid oder Niedrigalkylester einsetzt.

13. Verwendung der Verbindungen nach den Ansprüchen 1 bis 6 als Textilweichmacher in Waschmitteln oder Wäschenachbehandlungsmitteln mit einem Gehalt dieser Mittel an 0,5 bis 80 Gewichtsprozent der Verbindungen der Ansprüche 1 bis 8 wenigstens einem Verdünnungsmittel sowie gegebenenfalls sonstige übliche Zusatzstoffe für Waschmittel und Wäschenachbehandlungsmittel.

14. Verwendung nach Anspruch 13 in Wäschenachbehandlungsmitteln mit einem Gehalt an

2,0 - 30,0, vorzugsweise 5,0 - 25,0 Gewichtsprozent erfindungsgemäße Polyester,
0,2 - 6,0, vorzugsweise 0,5 - 3,0 Gewichtsprozent Dispergatoren,
0,0 - 30,0, vorzugsweise 1,0 - 15,0 Gewichtsprozent wasserlösliche organische Lösungsmittel,
0,0 - 10,0, vorzugsweise 0,3 - 7,5 Gewichtsprozent sonstige übliche Bestandteile von Wäschenachbehandlungsmitteln,
Rest Wasser